# EUROPÄISCHE PATENTSCHRIFT

(11) **EP 2 843 282 B1**
(45) Veröffentlichungstag und Bekanntmachung des Hinweises auf die Patenterteilung: **05.10.2016**
(21) Anmeldenummer: 14152605.3
(22) Anmeldetag: 27.01.2014
(51) Int. Cl.: F16K 41/04, F16K 1/226

(54) **Absperrventil**
Shut-off valve
Soupape d'arrêt

(30) Priorität: 29.08.2013 DE 102013217243
(43) Veröffentlichungstag der Anmeldung: 04.03.2015
(73) Patentinhaber: Erhard GmbH & Co. KG, 89522 Heidenheim (DE)
(72) Erfinder: Kampfl, Robert, 94522 Haidlfing (DE); Reiter, Thomas, 73450 Ohmenheim (DE)
(74) Vertreter: Dr. Weitzel & Partner

(56) Entgegenhaltungen:
- EP-A1- 1 095 689
- EP-A2- 1 811 211
- CA-C- 2 215 492
- DE-A1- 2 724 007
- DE-A1- 3 516 471
- DE-B- 1 192 894
- JP-A- 2007 120 595
- US-A- 2 876 987

## Beschreibung

Die Erfindung betrifft ein Absperrventil für fließfähige Medien zum Absperren oder Regeln des Mediums. Hierbei kommt vor allem Wasser in Betracht, aber auch Flüssigkeiten oder Gase. Eine solche Armatur ist beispielsweise bekannt geworden aus EP 0 756 115 B1, EP 0 498 315 A, DE 2 605 189 A, US 2 847 181 A oder DE 3 514 471 A1.

Das Absperrventil weist ein Gehäuse auf, das eine Durchflussöffnung für das Medium umschließt. Im Gehäuse ist eine Klappenscheibe gelagert, die verdrehbar ist um eine quer zur Strömungsrichtung verlaufende Drehachse, und zwar zwischen einer Offenstellung und einer die Durchflussöffnung absperrenden Schließstellung. Die Klappenscheibe ist von zwei Lagerzapfen getragen, deren jeder in einer Gehäusebohrung gelagert ist und deren einer in der Klappenscheibe drehfest eingreift. Die Lagerzapfen sind mit ihren radial inneren Enden drehfest mit der Klappenscheibe verbunden, beispielsweise durch eine Schrumpfverbindung. Einem der Lagerzapfen ist ein Antrieb zugeordnet, um den Lagerzapfen und damit auch die Klappenscheibe zwischen der Offenstellung und der Schließstellung zu verdrehen.

Absperrventile der genannten Bauart werden im Bereich der kommunalen Wasser-, Abwasser- und Gasversorgung sowie im Stahlwasserbau eingesetzt. Sie sind in vielen Fällen in erdverlegten Rohrleitungen eingebaut. Die Anforderungen an die Zuverlässigkeit sind hoch, insbesondere bei Medien wie Gas, aber auch bei Wasser, wobei die Verfügbarkeit der Versorgung gewährleistet sein muss. Das Absperrventil muss somit derart konstruiert sein, dass es zuverlässig im Betrieb ist, das aber auch alle Vorkehrungen gegen Störeinflüsse wie Korrosion, Verschmutzung gegeben sind.

Armaturen der genannten Art sind Massenartikel, die einem harten Wettbewerb ausgesetzt sind, besonders durch Importe aus Niedriglohn-Ländern. Deswegen muss die Konstruktion derart gestaltet werden, dass Herstellung und Montage kostengünstig sind, bei sicherer Funktionsfähigkeit. Gerade die beiden letztgenannten Erfordernisse werden von den bekannten Absperrventilen nicht in vollem Maße erfüllt.

Besondere Probleme treten durch Korrosion auf. Kritische Stellen sind die Übergangsstellen zwischen Gehäuse und Lagerzapfen sowie Klappenscheibe und Lagerzapfen. Zwischen Klappenscheibe und Gehäuse befindet sich ein freier Raum, in dem das Wasser Zutritt zum Lagerzapfen beziehungsweise einer diese umgebenden Lagerbuchse hat. Dort befindet sich jeweils ein Dichtring, somit zwischen Lagerbuchse und Klappenscheibe beziehungsweise zwischen Lagerbuchse und Gehäuse. In diesem Bereich können Klappenscheibe und Gehäuse mit einem inerten Material beschichtet sein, beispielsweise mit Emaille oder Epoxid oder Naturkautschuk oder einem anderen organischen oder anorganischen Material. Eine Beschichtung ist jedoch nicht immer möglich, und zwar besonders an denjenigen Stellen, an denen es auf die genaue Einhaltung von Passungen ankommt.

Die genannten Dichtringe (im Allgemeinen O-Ringe) sind in die Lagerbuchse eingelegt. Die Lagerbuchse muss zu diesem Zwecke eine gewisse Dicke aufweisen. Deshalb muss sie durch Drehen aus dem Vollen herausgearbeitet werden, was sehr teuer ist.

Der Erfindung liegt die Aufgabe zugrunde, ein Absperrventil der eingangs genannten Bauart derart zu gestalten, dass die Betriebssicherheit erhöht wird, insbesondere durch Vermeiden von Korrosion, bei kostengünstiger Gestaltung des Ventils.

Diese Aufgabe wird durch die Merkmale von Anspruch 1 gelöst.

Demgemäß werden zwei Dichtringkäfige vorgesehen, die sich im Bereich des Zwischenraumes zwischen Klappenscheibe und Gehäusebohrung befinden, und die den betreffenden Lagerzapfen umgeben und axial nebeneinander und dicht angeordnet sind.

Die Vorteile dieser Lösung bestehen im Folgendem:
Die O-Ringe sind nicht die Lagerbuchse eingelegt, sondern in Dichtringkäfige. Diese können aus jeglichem Material bestehen, beispielsweise aus Kunststoff. Jedenfalls sind sie sehr kostengünstig.

Die O-Ringe sind somit nicht in das Fleisch der Lagerbuchse eingebettet. Auch hat die Lagerbuchse keine Dichtfunktion. Aus diesen Gründen kann die Lagerbuchse ganz dünn sein. Sie kann aus einem dünnen Metallblech zur Zylinderform gerollt sein. Solche Buchsen sind Standardbuchsen, die im Vergleich zu einer aus dem Vollen gedrehten Buchse extrem billig sind.

Zwischen den O-Ringen und der Beschichtung findet keine Relativbewegung statt. Dies ist sehr vorteilhaft, weil die Oberfläche von Beschichtungsmaterial eine gewisse Rauhigkeit aufweist, die sich nachteilig auf die Lebensdauer von O-Ringen auswirkt.

Der Stand der Technik sowie die Erfindung sind anhand der Zeichnung näher erläutert. Die Figuren 1, 2 und 3 stellen den Stand der Technik dar, und Figur 4 veranschaulicht die Erfindung.
- Figur 1: zeigt ein Absperrventil in einem zur Strömung senkrechten Schnitt.
- Figur 2: zeigt einen Ausschnitt aus einem Ventil, gegenüber Figur 1 vergrößert.
- Figur 3: zeigt eine weitere Ausführungsform analog Figur 2.
- Figur 4: zeigt in stark vergrößerter Darstellung eine Schnittansicht eines Ventils, und zwar wiederum senkrecht zur Strömungsrichtung eines Lagerzapfens.

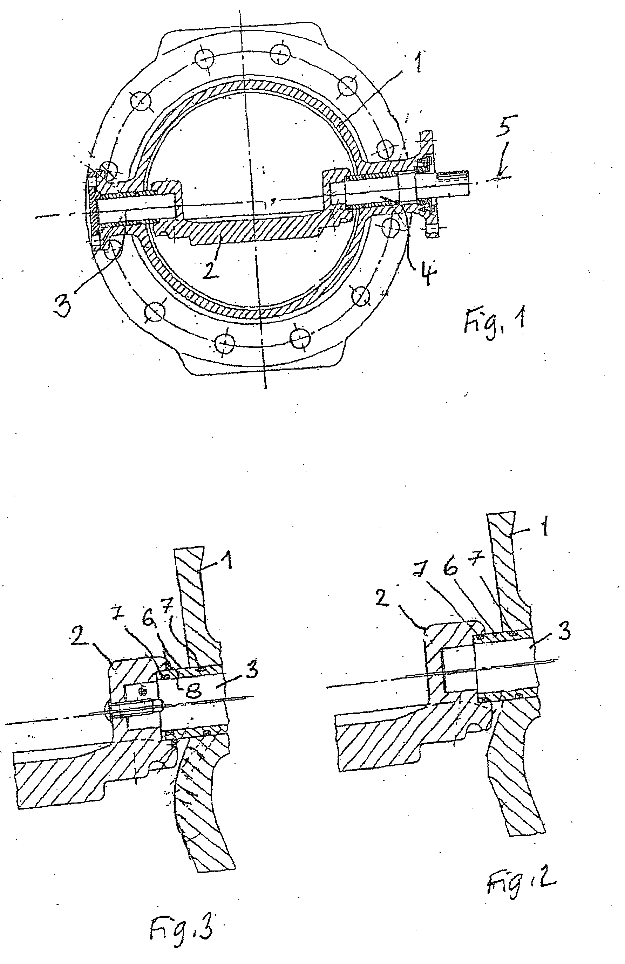

Das in den Figuren 1 bis 3 gezeigte Ventil umfasst ein Gehäuse 1, das eine kreisförmige Durchflussöffnung umschließt. In der Durchflussöffnung befindet sich eine Klappenscheibe 2. Im Gehäuse 1 sind zwei Lagerzapfen 3, 4 gelagert. Die Klappenscheibe 2 ist um eine Drehachse 5 zwischen einer hier dargestellten Offenstellung und einer Schließstellung verdrehbar. Dem Lagerzapfen 4 ist ein hier nicht gezeigter Antrieb zugeordnet, mit dem die Klappenscheibe 2 verdrehbar ist.

In den Figuren 2 und 3 erkennt man wiederum das Gehäuse 1, hier im Ausschnitt, ferner die Klappenscheibe 2 sowie einen Lagerzapfen 3, 4. Der Lagerzapfen 3, 4 greift mit seinem freien Ende in eine Sackbohrung der Klappenscheibe 2 ein. Lagerzapfen 3, 4 ist von einer Lagerbuchse 6 umschlossen. In eine Lagerbuchse 6 sind O-Ringe 7 eingelassen. Diese liegen an der Laibung der Sackbohrung der Klappenscheibe 2 an beziehungsweise an der Laibung der Gehäusebohrung.

In Figur 3 sind ebenfalls zwei O-Ringe vorgesehen. Jedoch liegen die beiden 0-Ringe nahe der Klappenscheibe 2 nicht an dieser, sondern an Lagerzapfen 3 an. Eine Dichtung 8 dichtet den Spalt zwischen der Lagerbuchse 6 und der Klappenscheibe 2 ab. Es ist bekannt, Beschichtungen im Bereich der Dichtungen vorzusehen.

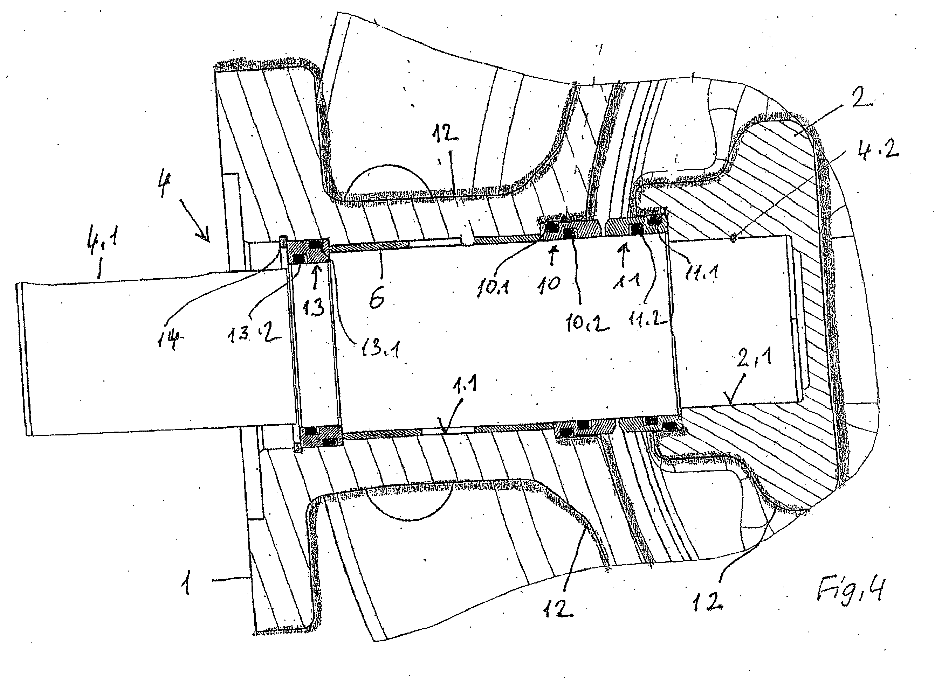

Die erfindungsgemäße Ausführungsform gemäß Figur 4 sieht anders aus. Figur 4 zeigt wieder die wesentlichen Bauteile eines Absperrventils: das Gehäuse 1 fragmentarisch, die Klappenscheibe 2 fragmentarisch, einen Lagerzapfen 4.

Der Lagerzapfen 4 ist in einer Gehäusebohrung angebracht. Der außen liegende Abschnitt 4.1 ist mit einem Antrieb drehfest verbunden. Der innen liegende Abschnitt 4.2 ist in eine Sackbohrung 2.1 der Klappenscheibe eingeschrumpft.

Die mediumberührten Flächen von Gehäuse 1 und Klappenscheibe 2 sind mit einer Antikorrosions-Beschichtung 12 versehen - hier schattiert gezeigt. Der eingeschrumpfte Abschnitt 4.2 weist keine Beschichtung auf.

Lagerzapfen 4 ist von zwei Dichtringkäfigen 10 und 11 umschlossen. Diese liegen axial eng aneinander. Jeder Dichtringkäfig enthält zwei O-Ringe. Siehe die O-Ringe 10.1, 10.2, 11.1, 11.2.

Wie man sieht, sind die äußeren O-Ringe 10.1, 11.1 der Beschichtung zugewandt.

Lagerzapfen 4 ist von einem weiteren Dichtringkäfig 13 umschlossen. Dieser trägt ebenfalls zwei O-Ringe 13.1, 13.2. Dichtringkäfig 13 liegt an einem Sicherungsring 14 an, der den Lagerzapfen 4 gegen Ausblasen sichert. Zwischen Dichtringkäfig 10 und Dichtringkäfig 13 befindet sich eine Lagerbuchse 6.

### Bezugszeichenliste

- 1: Gehäuse
- 1.1: Gehäusebohrung
- 2: Klappenscheibe
- 2.1: Sackbohrung
- 3: Lagerzapfen
- 4: Lagerzapfen
- 4.1: Antriebsabschnitt
- 4.2: eingeschrumpfter Abschnitt
- 5: Drehachse
- 6: Lagerbuchse
- 7: O-Ring
- 8: Dichtung
- 10: Dichtringkäfig
- 10.1: O-Ring
- 10.2: O-Ring
- 11: Dichtringkäfig
- 11.1: O-Ring
- 11.2: O-Ring
- 12: Beschichtung
- 13: Dichtringkäfig
- 13.1: O-Ring
- 13.2: O-Ring
- 14: Sicherungsring

## Patentansprüche

1. Absperrventil, umfassend die folgenden Merkmale:
1.1 ein Gehäuse (1), das eine Durchflussöffnung für ein Medium umschließt;
1.2 eine Klappenscheibe (2), die um eine quer zur Strömungsrichtung verlaufende Drehachse (5) zwischen einer die Durchflussöffnung absperrenden Schließstellung und einer Offenstellung verdrehbar ist;
1.3 zwei Lagerzapfen (3, 4), deren jeder in einer Gehäusebohrung (1.1) gelagert ist und in eine Sackbohrung (2.1) in der Klappenscheibe (2) eingreift;
1.4 der einzelne Lagerzapfen (3, 4) ist am Eingang der Sackbohrung (2.1) von einem ersten Dichtringkäfig (11) umschlossen, umfassend einen O-Ring (11.1), der an der Laibung der Sackbohrung (2.1) anliegt, sowie einem O-Ring (11.2), der an der Mantelfläche des Lagerzapfens (3, 4) anliegt;
1.5 axial neben dem ersten Dichtringkäfig (11) ist der Lagerzapfen (3, 4) am radial inneren Ende der Gehäusebohrung (1.1) von einem zweiten Dichtringkäfig (10) umschlossen, umfassend einen O-Ring (10.1), der an der Laibung der Gehäusebohrung (1.1) anliegt, sowie einem O-Ring (10.2), der am Lagerzapfen (3, 4) anliegt;
1.6 die Sackbohrung (2.1) in der Klappenscheibe (2) sowie die Gehäusebohrung (1.1) sind im Bereich der Dichtringkäfige (10, 11) beschichtet;
1.7 es ist ein dritter Dichtringkäfig (13) im Bereich des äußeren Endes der Gehäusebohrung (1.1) vorgesehen;
1.8 der Lagerzapfen (3, 4) weist wenigstens eine Lagerbuchse (6) auf;
1.9 die Lagerbuchse (6) ist zwischen dem dritten Dichtringkäfig (13) und dem zweiten Dichtringkäfig (10) angeordnet;
1.10 der erste Dichtringkäfig (11) ist mit der Klappenscheibe (2) drehfest;
1.11 der zweite Dichtringkäfig (10) ist mit dem Gehäuse (1) drehfest;
1.12 zwischen dem ersten Dichtringkäfig (11) und der Klappenscheibe (2) sowie zwischen dem zweiten Dichtringkäfig (10) und dem Gehäuse (1) befindet sich jeweils eine Antikorrosionsbeschichtung (12).

## Claims

1. A shut-off valve, comprising the following features:
1.1 a housing (1) which encloses a flow opening for a medium;
1.2 a valve plate (2) which can be twisted about a hinge pin (5) between a closed position blocking the flow opening and an open position, said hinge pin extending transversely to the direction of flow;
1.3 two bearing pins (3, 4), each of which is mounted in a housing borehole (1.1) and engages in a pocket hole (2.1) in the valve plate (2);
1.4 the individual bearing pin (3, 4) is surrounded at the entrance of the pocket hole (2.1) by a first sealing ring cage (11), comprising an O-ring (11.1) which rests on the reveal of the pocket hole (2.1), and an O-ring (11.2) which rests on the jacket surface of the bearing pin (3, 4);
1.5 the bearing pin (3, 4) is surrounded at the radially inner end of the housing borehole (1.1) axially adjacent to the first sealing ring cage (11) by a second sealing ring cage (10), comprising an O-ring (10.1) which rests on the reveal of the housing borehole (1.1), and an O-ring (10.2) which rests on the bearing pin (3, 4);
1.6 the pocket hole (2.1) in the valve plate (2) and the housing borehole (1.1) are coated in the region of the sealing ring cages (10, 11);
1.7 a third sealing ring cage (13) is provided in the region of the outer end of the housing borehole (1.1);
1.8 the bearing pin (3, 4) comprises at least one bearing bush (6);
1.9 the bearing bush (6) is arranged between the third sealing ring cage (13) and the second sealing ring cage (10);
1.10 the first sealing ring cage (11) is rotationally fixed with the valve plate (2);
1.11 the second sealing ring cage (10) is rotationally fixed with the housing (1);
1.12 an anticorrosion coating (12) is respectively situated between the first sealing ring cage (11) and the valve plate (2), and between the second sealing ring cage (10) and the housing (1).

## Revendications

1. Soupape d'arrêt comprenant les caractéristiques suivantes :
1.1 un boîtier (1) qui entoure une ouverture de débit d'un milieu ;
1.2 un disque de clapet (2) pouvant être tourné autour d'un axe de rotation (5) transversal au sens du débit entre une position de fermeture bloquant l'ouverture de débit et une position d'ouverture ;
1.3 deux tourillons (3, 4) chacun monté dans un alésage de boîtier (1.1) et s'engagent dans un alésage borgne (2.1) dans le disque de clapet (2) ;
1.4 le tourillon singulier (3, 4) est entouré d'une première cage de joint d'étanchéité (11) à l'entrée de l'alésage borgne (2.1), la cage comprenant un anneau torique (11.1) étant en appui sur l'intrados de l'alésage borgne (2.1), ainsi qu'un anneau torique (11.2) étant en appui sur l'enveloppe du tourillon (3, 4) ;
1.5 axialement adjacent à la première cage de joint d'étanchéité (11), le tourillon (3, 4) est entouré d'une deuxième cage de joint d'étanchéité (10) sur l'extrémité intérieure radiale de l'alésage de boîtier (1.1), la cage comprenant un anneau torique (10.1) étant en appui sur l'intrados de l'alésage de boîtier (1.1), ainsi qu'un anneau torique (10.2) étant en appui sur le tourillon (3, 4) ;
1.6 l'alésage borgne (2.1) dans le disque de clapet (2) ainsi que l'alésage de boîtier (1.1) sont recouverts dans la zone des cages de joint d'étanchéité (10, 11) ;
1.7 une troisième cage de joint d'étanchéité (13) est prévu dans la zone de l'extrémité extérieure de l'alésage de boîtier (1.1) ;
1.8 le tourillon (3, 4) présente au moins un coussinet (6) ;
1.9 le coussinet (6) est disposée entre la troisième cage de joint d'étanchéité (13) et la deuxième cage de joint d'étanchéité (10) ;
1.10 la première cage de joint d'étanchéité (11) est solidaire en rotation avec le disque de clapet (2) ;
1.11 la deuxième cage de joint d'étanchéité (10) est solidaire en rotation avec le boîtier (1) ;
1.12 un revêtement anticorrosion (12) est appliqué respectivement entre la première cage de joint d'étanchéité (11) et le disque de clapet (2) ainsi qu'entre la deuxième cage de joint d'étanchéité (10) et le boîtier (1).
